## Europäisches Patentamt

## European Patent Office

## Office européen des brevets

(19)

(11) Publication number: **0 073 078**
**B1**

# EUROPEAN PATENT SPECIFICATION

(12)

(45) Date of publication of patent specification: **29.10.86**

(21) Application number: **82200992.4**

(22) Date of filing: **05.08.82**

(51) Int. Cl.⁴: **H 04 Q 3/68,** H 04 Q 11/04,
H 04 L 11/00

(54) Modular switching network for telecommunication system.

(30) Priority: **21.08.81 US 295145**
**30.07.82 US 403706**

(43) Date of publication of application:
**02.03.83 Bulletin 83/09**

(45) Publication of the grant of the patent:
**29.10.86 Bulletin 86/44**

(84) Designated Contracting States:
**BE DE IT NL**

(56) References cited:
**EP-A-0 020 255**
**GB-A-2 067 050**
**US-A-4 228 536**

**PROCEEDINGS OF THE THIRD
INTERNATIONAL CONFERENCE ON
COMPUTER COMMUNICATION, 3rd-6th
August 1976, pages 424-431, Toronto, CA, Y.
LUNDH: "Distributed, modular computer-
controlled switching technique for speech and
data"**

**POST OFFICE ELECTRICAL ENGINEERS'
JOURNAL, vol. 73, April 1980, pages 27-34,
London, GB, G.P. OLIVER: "Architecture of
System X". Part 3 - Local exchanges"**

(73) Proprietor: **ITALTEL SOCIETA ITALIANA
TELECOMUNICAZIONI s.p.a.
P.le Zavattari, 12
I-20149 Milano (IT)**

(72) Inventor: **Israel, John W.
3611 Dartmouth Avenue
Dallas Texas 25205 (US)**

(74) Representative: **Coggi, Giorgio et al
ITALTEL Società Italiana Telecomunicazioni
s.p.a. (Servizio Brevetti) Casella Postale 10
I-20019 Settimo Milanese (MI) (IT)**

Courier Press, Leamington Spa, England.

**Description**

The present invention relates to a switching network adapted to facilitate selective message transmission among a multiplicity of peripheral units, such as subscriber stations or trunk lines, with the aid of signal-routing modules serving as automatic exchanges in a telecommunication system.

In such automatic exchanges it is known to provide routing modules, e.g. in the form of orthogonal switching matrices, responsive to instructions from associated control units which in turn may be commanded by a central controller. As a given switching matrix serves only a limited number of peripheral units, the several matrices must be able to intercommunicate in order to establish signal paths between stations respectively served thereby.

This creates problems when the network must be expanded to accommodate additional subscribers and/or to provide for a greater variety of available services.

The object of present invention, therefore, is to provide a network of this type which has the flexibility and adaptability required for expansion and/or service modification in a relatively simple and economical manner.

It is known in the art (for example from the US Patent n° 4.228.536) a modular switching network where each module has a set of input/output terminals connected to respective peripheral units, a control unit connected to the respective control units of the other modules and switching means controlled by the control unit. In accordance with present invention, the switching means comprise a plurality of interfaces connected to a plurality of peripheral units in a respective subgroup of the associated group; first register means connected to the output of said interfaces and comprising a number of registers corresponding to the number of subgroup units associated to each of said interfaces, each register being enabled by timing signals from control unit to load digital data words of a channel coming from a corresponding peripheral unit, a first channel concentrator with the inputs connected to said first register means and with a reduced number of outputs carrying in each phase the bits of an incoming data word selectively extracted therefrom on instructions from the control unit; a second channel concentrator with the inputs connected to second register means provided for temporarily storing data words coming from the outputs of said first channel concentrator of each module and with a reduced number of outputs carrying in each phase the bits of an outgoing data word extracted therefrom also in response to instructions from the control unit and distributing means for selectively feeding to the interfaces the data words outgoing from the second channel concentrator.

Pursuant to a more particular feature of the invention, the distribution means may comprise a channel expander (roughly complementary to the first channel concentrator) and a plurality of data stores in which the expander enters outgoing data words destined for any of the interfaces of the module concerned.

According to a preferred embodiment of the invention each interface includes third register means (one for each of the k peripheral units) for temporarily storing incoming data words of $m$ bits each ($m$ being preferably equal to 8, in conformity with the usual practice) which represent message samples of PCM channels received from the associated subgroup of peripheral units in respective time slots of an operating cycle; such a cycle coincides with a recurrent PCM frame which is divided into a multiplicity of phases, each time slot encompassing k phases.

According to a preferred embodiment of the invention, each interface further includes fourth register means for temporarily storing outgoing data words destined for the peripheral units in the associated subgroup, these outgoing data words being selectively fed thereto by distributing means inserted between the second channel concentrator and the several interfaces. The feeding of the outgoing data words to the fourth register means and thence to designated peripheral units of the associated subgroup takes place under instructions from the control unit delivered to the distributing means and to the fourth register means.

In the network particularly described hereinafter, each peripheral unit is linked with an interface terminal of the associated module through a bidirectional connection (e.g. a telephone line or a trunk). In principle, however, the invention is also applicable to systems in which incoming data words are received only from peripheral units acting as sources while outgoing data words are sent to other peripheral units acting as loads.

Advantageously, the number of peripheral units served by each interface of a routing module does not exceed the number of phases in a PCM frame; with the usual number of 32 time slots per frame, the maximum number of peripheral units in each subgroup is thus 256. This will ensure that under certain operating conditions, when all the peripheral units associated with a single interface of a module are active while the others are not, the data words or bytes received from all these active peripheral units will pass at least the first channel concentrator.

In the specific embodiment here disclosed, each module has eight interfaces accommodating up to 2,048 peripheral units. With the first concentrator of each routing module handling a maximum of 256 PCM channels, this allows for the establishment of simultaneous signal paths between up to 25% of all peripheral units served by the network, provided they are well distributed among the groups associated with the several modules. If necessary, of course, the maximum ratio of the number of simultaneous active peripheral units to the total number thereof can be increased by doubling or otherwise enlarging the output capacity of the two channel concentrators of one or more modules.

In a telephone system or the like, the control unit of any module will generally emit routing instructions on the basis of call signals received from an associated station and conveyed to the control unit of a module serving a called station (if the two modules are different) via the intermodule connection available for the transmission of data words. In some systems, however, these control units could also be connected by a centralized higher-ranking controller to establish and terminate connections between specified peripheral units, e.g. in accordance with a predetermined program.

The above and other features of the present invention will now be described in detail with reference to the accompanying drawings in which:

FIG. 1 is a block diagram of a switching network according to the present invention including a plurality of structurally identical routing modules;

FIG. 2 is a block diagram of one of the routing modules of Fig. 1, showing several structurally identical input/output interfaces;

FIG. 3 is a block diagram of a first part of an interface of Fig. 2, designed for the handling of incoming data words;

FIG. 4 is a block diagram of a second part of the interface illustrated in Figs. 2 and 3, designed for the handling of outgoing data words;

FIGS. 5A and 5B are two time diagrams relating to the processing of incoming data words by the interface components illustrated in Fig. 3; and

FIG. 5C is a time diagram relating to the processing of outgoing data words by the interface components illustrated in Fig. 4.

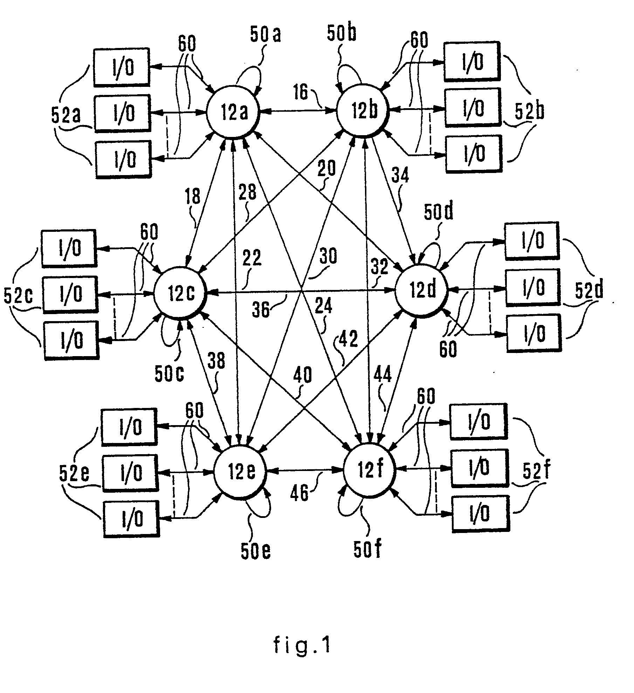

As illustrated in Fig. 1, a switching network according to the present invention comprises a plurality of signal-routing modules 12a, 12b ... 12f interconnected in a full-mesh mode. Module 12a is connected to modules 12b, 12c ... 12f via respective bidirectional signal paths 16, 18, 20, 22, 24. Module 12b is directly linked to modules 12c, 12d, 12e and 12f via bidirectional paths 28, 24, 30 and 32, respectively. Module 12c communicates with modules 12d, 12e and 12f via paths 36, 38 and 40. Similar transmission paths 42 and 44 couple the modules 12e and 12f to module 12d while modules 12e and 12f communicate via a bidirectional path 46 with each other. Thus, each module in the telecommunication system of Fig. 1 exchanges information with all the other modules of the network.

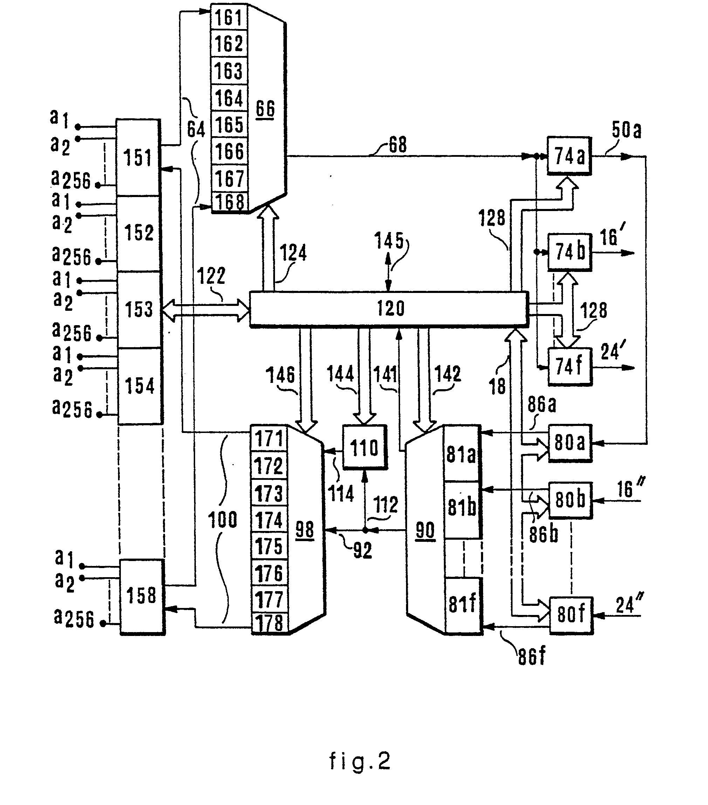

Each module 12a, 12b ... 12f is also provided with a respective feedback loops 50a, 50b, ... 50f on which it receives back some of the data words and routing information emitted by it. As described hereinafter with reference to Fig. 2, the feedback loops 50a, 50b ... 50f enable the establishment of a signal path between two peripheral units connected to the same module.

Each module of Fig. 1 is further tied via a number of bidirectional multiples 60 to a respective group of associated peripheral units 52a, 52b ... 52f. These peripheral units may be telephones, teletypewriters, video displays, data processors, PCM trunk lines or the like; the information being carried by multiples 60 is assumed to be in analog form though this need not be the case. The full-mesh interconnection of switching modules 12a, 12b ... 12f enables any peripheral unit in the system to communicate with any other unit in the network. The designation I/O of units 52a—52f indicates that they act as the input/output parts of the overall system.

The modular design of a switching network according to the present invention facilitates the addition of peripheral units that are geographically remote from the pre-existing peripheral units thereof. Any such remote peripheral units can be connected to the network through an additional routing module in turn tied to each of the existing modules via a respective bidirectional communication path.

As particularly illustrated in Fig. 2 for routing module 12a, each module includes eight interfaces 151—158 with up to 256 terminals $a_1$—$a_{256}$ connected at least in part to respective peripheral units.

These interfaces have input multiples 64 (only two shown) extending to respective data stores 161—168. Each of these data stores comprise 256 pairs of 20-bit registers, the registers of each pair being alternately enabled by timing signals from a control unit 120 to load 20-bit data words carried in corresponding phases of consecutive recurrences of an incoming PCM frame.

Data stores 161—168 are linked to a channel concentrator or compressor 66 (essentially a PCM multiplexer) which, in response to instructions received from control unit 120 via a bus 124, selectively reads out the contents of their registers onto a 20-lead output multiple 68. This multiple extends to a plurality of transmitting junctors 74a, 74b ... 74f, one for each routing module 12a, 12b, ... 12f. Feedback loop 50a serves as an output multiple of junctor 74a whereas junctors 74b—74f have output multiples 16', 18', 20', 22', 24' respectively included in the bidirectional signal paths 16, 18, 20, 22, 24 of Fig. 1. The junctors 74 are operatively tied via buses 128 to control unit 120 for receiving therefrom instructions to be transmitted to all the modules of the network. The control unit also communicates with interfaces 151—158 by way of a bidirectional bus 122.

Module 12a further incorporates a plurality of receiving junctors 80a, 80b ... 80f respectively assigned to all the modules 12a—12f. Junctor 80a is connected to transmitting junctor 74a via feedback loop 50a whereas junctors 80b—80f receive signals from modules 12b—12f via multiples 16'', 18'' 20'', 22'' and 24'' also included in bidirectional signal paths 16, 18, 20, 22, 24, respectively. Receiving junctors 80a—80f have respective output multiples 86a, 86f, working into data stores 81a—81f each advantageously comprising 257 pairs of registers, the registers of 256 of these pairs each having 20 stages for the memorization of 20-bit data words arriving from the several modules over feedback loop 50a and bidirectional paths 16, 18, 20, 22, 24 via receiving junctors 80a—80f (the remaining 257th pair of registers being destined to store, as described hereinafter, the instruction bits coming from control unit 120).

Data stores 81a—81f are connected to a channel concentrator 90 also designed as a PCM multiplexer. In response to commands from unit 120, concentrator 90 selectively transmits onto a 20-lead multiple 92 data words written in the registers of stores 81a—81f. During each frame period, i.e. during a time interval coinciding with the transmission of an incoming PCM frame by concentrator 66 or with the reception of an outgoing PCM frame by any junctor 80a—80f, concentrator 90 selects 256 data words from among the $6 \times 257$ words registered in stores 81a—81f and emits the selected words in successive phases of an outgoing frame. The selected data words are conveyed to a channel expander 98 (essentially a PCM demultiplexer) via multiple 92 and to a conference bridge 110 via a branch 112 of that multiple. As described in greater detail hereinafter, conference bridge 110 facilitates multiparty telephone calls among subscriber stations represented by the peripheral units of Fig. 1; bridge 110 transmits output signals to expander 98 via a data multiple 114 in response to instructions received from control unit 120 on a command bus 144. A two-way connection 145 links the unit 120 with a central controller (not shown) for the performance of ancillary operations such as data storage, error detection and man/machine dialoguing.

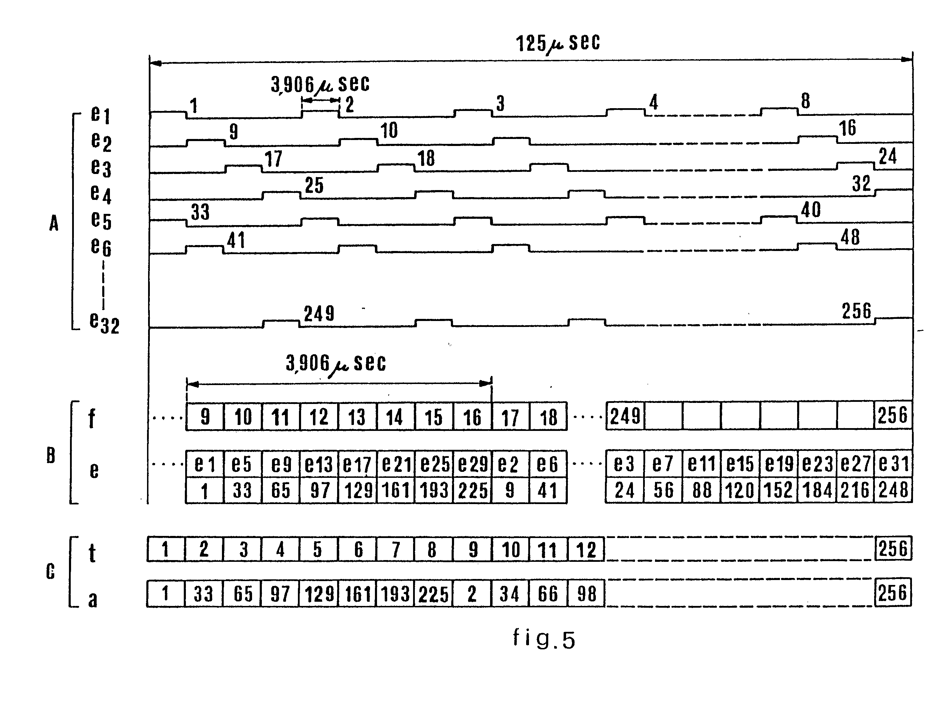

Channel expander 98 is connected on its output side to eight data stores 171—178 which have output multiples 100 (only two shown in Fig. 2) extending to respective interfaces 151—158. In accordance with switching commands received from control unit 120 via a bus 146, expander 98 loads signals arriving over multiples 92 and 114 into selected registers of data stores 171—178. Each of these stores includes 256 pairs of registers assigned to respective peripheral units served by one of the eight interfaces. The registers of each pair assigned to a peripheral unit communicating with another peripheral unit are alternately enabled by recurrent timing signals from the control unit to load 20-bit data words carried in a corresponding phase of consecutive recurrences of an outgoing PCM frame. Data-receiving registers of up to 256 pairs selected by expander 98 in accordance with the commands from control unit 120 are loaded with data words during any given frame period while corresponding registers of nonselected pairs do not receive any data. During the succeeding frame period the previously loaded registers of each selected data store 171—178 are enabled in a preestablished sequence to read their contents onto the associated output multiple 100, as described in detail hereinafter with reference to Fig. 5C.

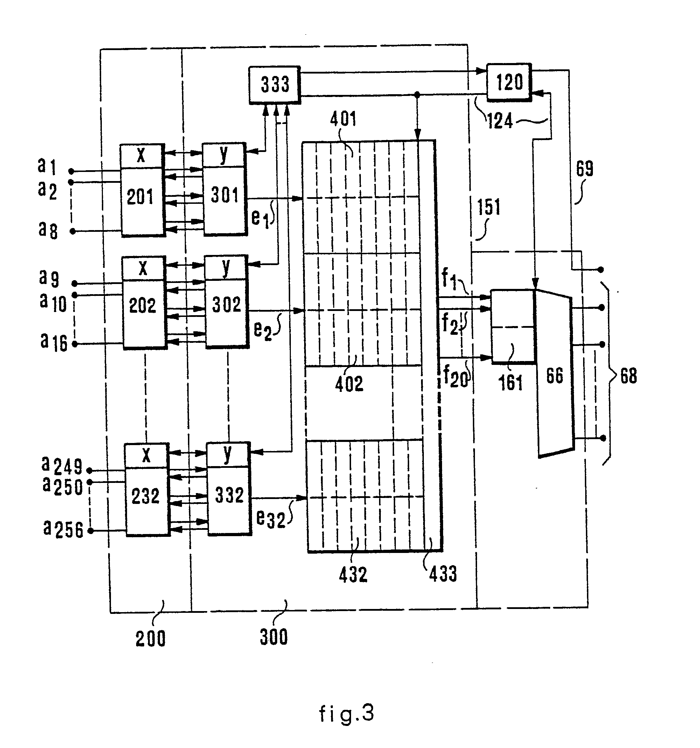

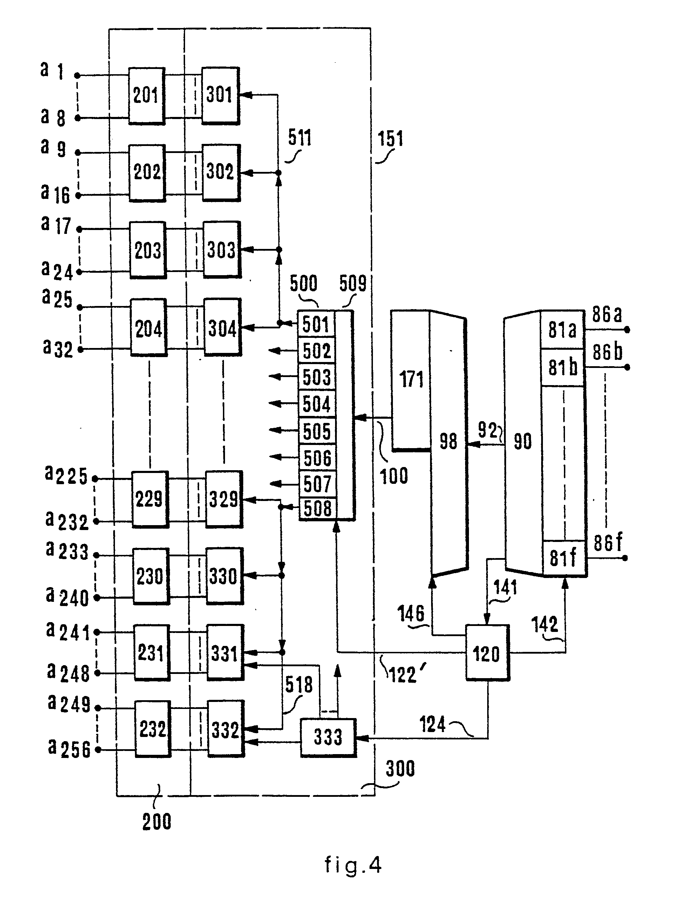

As illustrated in Figs. 3 and 4, interface 151 — which is structurally identical with interfaces 152—158 — comprises a first section 200 connected to 256 peripheral units out of an assumed total of 2,048 such units associated with module 12a. A second section 300 of interface 151 is disposed between section 200 and the other components of module 12a, particularly the associated data stores 161 and 171. Section 200 includes 32 input/output ports 201—232 each tied to eight peripheral units of the associated subgroup. Ports 201—232 comprise hybrid circuits for performing the conversion of each outer route allocated to a peripheral unit into two routes respectively allocated to the transmission and the reception side of the module.

Each port 201—232 is provided with a sensing circuit $x$ which scans the associated subscriber lines for detecting a signal indicating an attempt to establish a calling connection; this information is transmitted to control unit 120 which responds thereto as described hereinafter. Where the peripheral units 52 are conventional telephones, such a signal indicates an off-hook condition of a telephone handset. The release of a line is similarly reported to the control unit.

Section 300 includes 32 sets of eight transcoders 301—332 respectively connected to the input/output ports 201—232 for digitizing incoming analog signals (e.g. voice samples) and for converting into analog form digital signals outcoming from buffer component 500 of Fig. 4. Ports 201—232 may be adapted to transform incoming analog voltages into waveforms having voltage levels suitable for digitization by the analog-to-digital converters of these transcoders.

The transcoders 301—332 may incorporate signal generators which emit ringing signals to called peripheral units and ringing, dial or busy tones to calling peripheral units by way of the hybrid circuits of ports 201—232, the signal generators being activated in response to commands transmitted from control unit 120 over a buffer circuit 333 and logic circuit $Y$ included in the transcoders. Alternatively, the signal generators may be included in these hybrid circuits and activated by the sensing circuits $x$ which are coupled to the respective logic circuits $y$.

In response to commands from control unit 120, each logic circuit $y$ controls the respective set of eight transcoders for analog/digital conversion of signals arriving from the eight associated peripheral units via the intervening group of eight input/output ports. The bits of incoming data words (bytes) serially emitted on transcoder outputs $e_1$—$e_{32}$ are fed to respective pairs 401—432 of 8-bit registers.

As illustrated in rows $e_1$—$e_{32}$ of Fig. 5A, data words (labeled 1—256 according to their originating terminals $a_1$—$a_{256}$) are transmitted from transcoder circuits 301—332 to register pairs 401—432 in a 125-microsecond operating cycle (corresponding to a PCM frame) subdivided into eight subcycles each having a duration of 15.625 microseconds. Each transcoder emits one 8-bit word or byte during each subcycle. However, the emission times are staggered so that eight preselected transcoders of sets 301, 305, 309, 313, 317, 321, 325 and 329 emit their bytes during a first time slot of each subcycle, eight other transcoders of the sets 302, 306, 310, 314, 318, 322, 326 and 330 do so during a second time slot, eight further transcoders 303, 307, etc. utilize a third time slot and the remaining eight transcoders 304, 308, etc. are active during a fourth time slot; each time slot is approximately 3.096 microseconds in duration.

As further illustrated in Fig. 3, register pairs 401—432 are connected to a series-to-parallel converter 433 which transmits to data store 161 during each time slot of an operating cycle the information received by eight of these registers during the immediately preceding time slot. Converter 433 is also designed to append a 12-bit error-correction code to the bytes arriving from transcoders 301—302 via register pairs 401—432. The resulting 20 bits of each data word are emitted over respective leads $f_1$—$f_{20}$ to data store 161. The order in which the information is transmitted is controlled by unit 120 via bus 124.

As indicated in graphs $e$ and $f$ of Fig. 5B, each of the 32 time slots of an operating cycle of interface 151 is divided into eight phases during each of which a data word — labeled in graph $e$ as in Fig. 5A — is transmitted in parallel form to a respective register in data store 161 from an associated register in group 401—432. During phases 9—16 corresponding to the second time slot of an operating cycle, graph $f$, series-to-parallel converter 433 transmits from register pairs 401, 405, 409, 413, 417, 421, 425, 429 the bytes loaded into one register of each pair during the first time slot of the cycle. The first bytes fed by loads $e_2$, $e_6$, $e_{10}$, $e_{14}$, $e_{18}$, $e_{22}$, $e_{26}$, $e_{30}$ into the data receiving registers of pairs 402, 406, 410, 414, 418, 422, 426, 430 during the second time slot of the first subcycle, as partly illustrated in Fig. 5B, are transferred by converter 433 to data store 161 during the series of phases 17—24 coinciding with the third time slot of that subcycle. Thus, the eight registers of groups 401—432 receiving byte sequences from transcoders 301—332 in one time slot of an operating cycle are read out to converter 433 in the succeeding time slot.

During the common operating cycle of interfaces 151—158, data stores 161—168 can each receive 256 incoming 20-bit words for temporary memorization by registers thereof activated for reception by control unit 120 which includes a nonillustrated time base. Each of these momentarily data-receiving registers is paired with a respective structurally identical 20-bit register which was activated during the preceding operating cycle for receiving a data group from the respective converter 433 in the associated interface. During any such operating cycle, the 20 bits of each data word written in each of the 2,048 registers of data stores 161—168 activated for writing during the preceding cycle are selectively unloaded in parallel onto multiple 68 in response to reading commands received from control unit 120 via bus 124. Not more than 256 words, however, may be emitted by concentrator 66 in a PCM frame outgoing over multiple 68; that frame thus includes 256 channels and is contemporaneous with an operating cycle of interfaces 151—158 and data stores 161—168.

As also illustrated in Fig. 3, control unit 120 is provided with an output connection 69 which may be formed as part of bus 128 (Fig. 2). This connection carries instructions regarding the establishment and release of signal paths between pairs of peripheral units 52 (Fig. 1), or among a larger number of peripheral units in the case of conference calls. The output multiples 50a, 16', 18', 20', 22', 24' of transmitting junctors 74a—74f (see Fig. 2) must therefore each include 20 leads branched off multiple 68 and one or more further leads extending from connection 69; the same number of leads are, of course, required for the input multiples of receiving junctors 80a—80f. Moreover, data stores 81a—81f have 257 register pairs each, i.e. 256 register pairs for temporarily memorizing outgoing data words to be emitted on multiple 92 and an additional register pair for storing instruction bits generated by the control unit 120 of a respective module 12a—12f. As shown in Fig. 2, concentrator 90 is provided with an output connection 141 extending to control unit 120 for supplying same with instructions words from all six modules in as many supervisory channels addressed by switching commands fed to multiplexer 90 by control unit 120 via a bus 142.

As shown in Fig. 4, each interface 151—158 incorporates in section 300 a buffer component 500 including a parallel-to-series converter 509 inserted between the 20-lead multiple 100, extending from data store 171, and eight pairs 501—508 of 8-stage registers. Register pairs 501—508 are connected via respective output leads 511—518 to respective groups of four sets of transcoders in the associated set 301—332.

Data store 171 shown in Fig. 4 contains 256 pairs of 20-stage registers, each such pair being assigned to a respective input/output terminal $a_1$—$a_{256}$ of the hybrid circuits forming part of ports 201—232; obviously, some of these terminals may not be connected to peripheral units. Upon saturation of the network, further modules may be readily added to increase its capacity, e.g. up to 16.

During an operating cycle of touring module 12a, up to 256 outgoing 20-bit data words are extracted by concentrator 90 from selected read-enabled registers of stores 81a—81f and are distributed by expander 98 to respective registers in stores 171—178 in accordance with commands from control unit 120. While expander 98 is loading the write enabled registers of store 171 with data bits to be sent out, that store delivers to 20-lead multiple 100 the contents of registers which were activated to receive data during the preceding operating cycle but which are enabled to emit data during the current cycle.

Data emission from the read-enabled registers of store 171 to terminals $a_1$—$a_{256}$ of interface 151 proceeds according to graphs $a$ and $t$ of Fig. 5C.

An operating cycle of 125 microseconds, corresponding to a PCM frame, is divided into 32 time slots each consisting of eight phases illustrated in graph $t$. During each time slot, buffer component 500 receives eight 20-bit data words destined for respective transcoder groups 301—304, ... 329—332. Parallel-to-series converter 309 transforms each arriving 20-bit word into an 8-bit word while simultaneously executing any corrections indicated by the 12-bit error code included in the arriving word. The resulting byte is loaded by converter 509 into a data-receiving register of a pair selected in accordance with the temporal position of the word in an operating cycle, i.e. in accordance with the phase in which the 20-bit word arrived over multiple 100.

As shown in graph $a$ of Fig. 5C, data words arriving in phases Nos. 1—8 constituting the first time slot of an operating cycle are to be ultimately transmitted to peripheral units connected to terminals $a_1$, $a_{33}$, $a_{97}$, $a_{129}$, $a_{161}$, $a_{193}$, $a_{225}$, respectively, of interface section 200. During this first time slot of outgoing bytes are loaded in 8-bit form into write-activated registers of respective pairs 501—508. During the next time slot the bits of each byte are serially emitted onto leads 511—518 from register pairs 501—508. The byte destined for the peripheral unit connected to terminal $a_1$ of interface section 201 is transmitted via lead 511 to all the digital/analog converters in transcoders 301—304; control unit 120, however, activates only the corresponding converter of transcoder set 301 via buffer circuit 333 and the logic circuit $y$ of that transcoder. Analogous routing procedures are used for the bytes emitted onto leads 512—518 from the read-enabled registers of pairs 502—508.

During phases Nos. 9—16, of an operating cycle, i.e. in the course of its second time slot, write-activated registers of pairs 501—508 are fed bytes carrying information ultimately destined for peripheral units connected to terminals $a_2$, $a_{34}$, $a_{66}$, $a_{98}$, $a_{130}$, $a_{162}$, $a_{194}$, $a_{226}$ of interface section 200. In the 9th phase, even as a 20-bit data word intended for terminal $a_2$ is received in parallel form by converter 509, read-enabled registers of pairs 501—508 emit onto lead 511—518 the first bits of the bytes received during phases Nos. 1—8, respectively. The 2nd through 8th bits of these previously received bytes are emitted in the phases Nos. 10 through 16, respectively. Thus, the bits of data words consecutively transmitted in parallel over multiple 100 in the eight phases of a time slot and transformed into bytes for converter 509 are successively loaded into respective write-activated registers of pairs 501—508, being then concurrently read out in series over respective output leads 511—518 during the succeeding time slot. Data emission from the read-enabled registers of pairs 501—508 is carried out in response to commands generated by control unit 120 on a connection 122' forming part of bus 122 (see Fig. 2).

Upon detecting an off-hook condition (seizure) in a line connected to an input/output terminal, the sensing circuit $x$ of the respective port 201—208 emits an identification signal toward control unit 120 through the logic circuit $y$ of the associated transcoders and via buffer circuit 333, this identification signal coding the identity of the calling subscriber station. In response to the identification signal, the control unit assigns to the calling station a first channel in the PCM frame carried by multiple (68) (Fig. 2) and a second channel in the PCM frame carried by multiple 92. These channels corresponding to respective phases in the operating cycle of switching module 12$a$. Control unit 120 then enables the emission of a dial tone to the calling station. Preferably, the dial tone is generated by a circuit incorporated in expander 98 and is selectively transmittable to all the transcoders in interfaces 151—158 in response to commands generated by control unit on bus 146.

If the calling station is equipped with a pushbutton digit selector, control unit 120 also assigns to it a multifrequency digit transceiver and a phase through which a voice path is established between the subscriber line and the transceiver.

Upon the reception of digit-selection signals from the calling station, the corresponding interface (e.g. 151) halts the transmission of the dial tone, with pushbutton selection the multifrequency digit transceiver is not released until dialing is completed.

Sensing circuits $x$ of interface section 200 monitor the incoming digit-selection signals and transmit them in coded form to control unit 120 via logic circuits $y$ and buffer circuit 333. Upon the reception of all the selected digits, control unit 120 identifies the switching modules 12$a$—12$f$ associated with the called subscriber station and transmits a connection request to the identified module via bus 128 (see Fig. 2), one of the junctors 74$a$—74$f$ and an outgoing multiple 50$a$, 16', 18', 20', 22' or 24'. Upon receiving the connection request via one of the junctors 80$a$—80$f$, one of data stores 81$a$—81$f$, concentrator 90 and connection 141, the control unit 120 of the module linked to the called subscriber station identifies the same and assigns thereto a first channel in the incoming PCM frame carried by multiple 92 and a second channel in the outgoing PCM frame carried by multiple 68 of this module, provided the called subscriber station is available for a call connection. Upon assigning such transmission channels, control unit 120 of the receiving module emits a signal over bus 122 to the interface connected to the called station, enabling the emission of a ringing signal thereto.

The control unit of the receiving module notifies the control unit of the transmitting module (if different therefrom) that the called subscriber is available, whereupon the latter control unit induces the emission of a ringing tone to the calling subscriber. Upon seizure of the line by the called subscriber, the control units involved terminate the emission of the aforementioned signals to the called and the calling subscriber. The described procedure is similar when the peripheral unit requesting the connection is a trunk line.

During a conference call, control unit 120 of each involved routing module instructs its bridge 110 to temporarily memorize data signals appearing in several channels in the outgoing PCM frame carried by multiple 92. Bridge 110 algebraically sums the data signals received during any given operating cycle and transmits the resulting digital sample to expander 98 via connection 114 for loading into a write-activated register associated with each subscriber station participating in the conference call.

In a telecommunication system according to the present invention, memory and control functions are distributed throughout the switching network. The modular design facilitates the expansion of the system to accommodate increased consumer demand. The system is versatile in its capacity for handling analog as well as digital signaling from various types of peripheral units as noted above. For improved reliability, components may be duplicated to provide a certain redundancy as is well known in the art.

**Claims**

1. A modular switching network for telecommunication system essentially consisting of a number of "f" signal-routing modules ($12_a, ... 12_f$) each module having a group of input/output terminals connected to respective peripheral units, a control unit (120) connected to the respective control units of the other modules, which performs the supervision of all operations concerning the analysis of the telephone signalling and also performs the routing, prolongation and supervision of any connection and switching means controlled by said control unit, characterized in that said switching means comprises in combination:
— a plurality of interfaces (151, 152, ...) each connected to a subgroup of peripheral units via a corresponding subgroup of said group of terminals; each interface including a set of transcoding means (301, 302, ...), each connected to a corresponding subset of said subgroup of peripheral units, for converting analog message samples into digital data words and vice versa;
— first register means (161, 162, ...), each of these first register means being connected to the output of one of said interfaces (151, 152, ...) and comprising a number of registers corresponding to the number of peripheral units associated to each of said interfaces (151, 152, ...) each first register being enabled by timing signals from control unit (120) to load the digital data words of a data channel coming from the corresponding interface unit (151, 152, ...);
— first channel concentrating means (66) with input connected to said first register means (161, 162, ...) and with a reduced number of first outputs carrying in each phase the bits of an incoming data word extracted from said first register means in response to instructions from said control unit;

— second register means ($81_a, ... 81_f$) with inputs connected to said first outputs of all said modules for temporarily storing the data words carried thereon in each phase;
— second channel-concentrating means (90) with input connections to said second register means ($81_a, ... 81_f$) and with a reduced number of second outputs carrying in each phase the bits of an outgoing data word extracted from said second register means in response to instructions from said control unit;
— distributing means (98) inserted between said second channel-concentrating means (90) and said interfaces for selectively feeding outgoing data words from said second outputs to said interfaces (151, 152, ...) in response to instructions from said control unit, said distributing means (98) comprising channel-expanding means and a plurality of data stores (171, 172, ...), each connected to a respective interface, said channel-expanding means entering outgoing data words destined for any of said interfaces in the corresponding data store.

2. A network as defined in claim 1, characterized in that each of said interfaces (151, 152, ...) comprises a set of third register means (401, 402, ...), one for each transcoding means (301, 302, ...) used for temporarily storing data words coming from the related transcoding mean in respective time slots of an operating cycle coinciding with a recurrent PCM frame divided into a multiplicity of phases, each of said time slots encompassing as many phases as peripheral units are connected to the related transcoding mean (301, 302, ...).

3. A network as defined in claim 1, characterized in that each of said interfaces (151, 152, ...) comprises fourth register means (501, 502, ...), each related to a plurality of transcoding means (301, 302, ...), utilized for temporarily storing outgoing data words destined to peripheral units connected to said interface, said fourth register means being responsive to instructions from said control unit (120) for directing message samples corresponding to the stored outgoing data words in successive time slots to designated peripheral units of the associated subgroup, an operating cycle corresponding to a PCM frame comprising as many time slots as peripheral units are connected to the plurality of transcoding means related to each fourth register mean.

4. A network as defined in claim 2, characterized by the fact that said third register means (401, 402, ...) include conversion means for supplementing each incoming data word with additional bits constituting a corrective code, the resulting bit combination being transferred in parallel to said first channel-concentrating means (66).

5. A network as defined in claim 1 or 2, characterized in that each of said register means comprises a multiplicity of register pairs, the registers of each pair being alternately enabled by said control unit for the reception of data words to be stored and for the emission of the data words so stored.

6. A network as defined in claim 1 or 2, characterized in that each module further includes a conference bridge addressable by said second outputs under instructions from said control unit for emitting the algebraic sum of data words from several channels, extracted from said second register means during a given operating cycle, to said distributing means.

**Patentansprüche**

1. Modulares Vermittlungsnetz fuer ein Fernmeldesystem, das im wesentlichen aus einer Anzahl von "f" Signalvermittlungsmodulen (12 a ... 12 f) besteht, von denen jeder eine Anordnung von jeweils mit peripheren Einheiten verbundenen Eingangs/Ausgangs-Anschluessen hat, welche die Ueberwachung aller die Analyse der Fernsprechsignalisierung betreffenden Operationen sowie die Leitweg- oder Richtungssteuerung, die Durchschaltung und die Ueberwachung aller Verbindungen ausfuehrt, dadurch gekennzeichnet, dass die Schaltungseinheiten in Kombination folgendes enthalten:

— eine Mehrzahl von Schnittstellen (151, 152 ... ), jede ueber entsprechende Unterserien der Anschluesse mit einer Mehrzahl von peripheren Einheiten verbunden ist; und von denen jeder Schnittstelle Transcodiermittel (201, 302. ...) zum Umwandeln von Abtastproben analoger Meldungen in digitale Datenwoerter und umgekehrt enthaelt und mit den entsprechenden Unterserien angeschlossen ist;

— erste Registriereinrichtungen (161, 162 ...), von denen jede an den Ausgang einer der Schnittstelle (151, 152 ...) geschaltet wird und eine der Anzahl der Schnittstellen (151, 152 ...) zugeordneten Untergruppen-Einheiten entsprechende Anzahl von Registrern aufweist, die jeweils von Taktsignalen der Befehlseinheit (120) zum Laden von digitalen Datenwoertern eines von einer entsprechenden peripheren Einheit kommenden Kanals gesteuert werden;

— erste Kanalkonzentriermittel (66), die mit dem Eingang einer der Schnittstellen (161, 162 ...) verbunden sind und eine begrenzte Anzahl von ersten Ausgaengen aufweisen, welche in jeder Phase die Bits eines ankommenden Datenwortes abgeben, das aufgrund von Befehlen der Befehlseinheit den ersten Registriereinrichtungen entnehmen wird;

— zweite Registriermittel (81a ... 81f), deren Eingaenge mit den ersten Ausgaengen aller Modulen verbunden sind, um zeitweilig die waehrend jeder Phase gelieferten Datenwoerter zu speichern;

— zweite Kanalkonzentriermittel (90), die an den Eingang der zweiten Registriereinrichtungen (81a ... 81f) geschaltet sind und eine begrenzte Anzahl von zweiten Ausgaengen aufweisen, die waehrend jeder Phase die Bits eines Datenwortes abgeben, das aufgrund von Befehlen der Befehlseinheit den zweiten Registriereinrichtungen entnommen wird;

— Verteilungsmittel (98), welche zwischen die zweiten Kanalkonzentriermittel (90) und die Schnittstellen geschaltet sind, um von den zweiten Ausgaengen kommende Datenwoerter selektiv aufgrund von Befehlen der Befehlseinheit den Schnittstellen (151, 152 ...) zu senden, und welche (98) Kanalexpansionsmittel sowie eine Mehrzahl von Datenspeichern (171, 172 ...) aufweisen, und welche direkt mit den entsprechenden Schnittstellen verbunden sind, wobei die Kanalexpansionsmittel die fuer die Schnittstellen bestimmten auskommenden Datenwoerter in die entsprechende Datenspeicher uebertragen.

2. Vermittlungsnetz gemaess Anspruch 1, dadurch gekennzeichnet, dass jede Schnittstelle (151, 152 ...) fuer je periphere Einheiten (301, 302 ...) eine dritte Registriereinrichtung (402, 402 ...) aufweist, und dass die dritten Registriereinrichtungen zur zeitweiligen Speicherung der ankommenden Datenwoerter dienen, welche aus den entsprechenden Transcodiermittel (301, 302 ...) in Zeitintervallen eines Betriebszyklus kommen, der mit einem sich wiederholenden, in mehreren Phasen unterteilten PCM-Rahmen zusammenfaellt, wobei jedes dieser Zeitintervalle die den Phasen entsprechenden peripheren Einheiten enhaelt, welche mit den entsprechenden Transcodiermitteln (301, 302 ...) verbunden sind.

3. Vermittlungsnetz gemaess Anspruch 1, dadurch gekennzeichnet, dass jede Schnittstelle (151, 152 ...) vierte Registriermittel (501, 502 ...) enthaelt, wobei jede Schnittstelle mit einer Mehrzahl von Transcodiermitteln (301, 302 ...) verbunden ist und zum zeitweiligen Speicherung der fuer die peripheren Einheiten bestimmten abgehenden Datenwoerter aufweist, und dass diese vierten Registriermittel auf Befehl der Befehlseinheit (120) ansprechend, die den ausgangsseitig gespeicherten Datenwoertern entsprechenden Meldungsabtastproben auf die designierten peripheren Einheiten der zugehoerigen Untergruppe in einer Anzahl aufeinanderfolgender Zeitintervallen waehrend eines einem Rahmen entsprechenden Betriebszyklus verteilen.

4. Vermittlungsnetz gemaess Anspruch 2, dadurch gekennzeichnet, dass die dritten Registriermittel (401, 402 ...) Umwandlungsmittel zum Vervollstaendigen jedes ankommenden Datenwoertes mit einen der Korrekturcode bildenden ergaenzenden Bits und zur Abgabe der sich ergebenden Bitkombination in Parallelform an die ersten Kanalkonzentriermittel (66) aufweisen.

5. Vermittlungsnetz gemaess Anspruch 1 oder 2, dadurch gekennzeichnet, dass jede der Registriermittel mehrere Paare von Registern enthaelt und die Register jedes Paares von der Befehlseinheit abwechselnd zum Empfang der zu speichernden Datenwoerter und zum Absenden der jeweils gespeicherten Datenwoerter befaehigt werden.

6. Vermittlungsnetz gemaess Anspruch 1 oder 2, dadurch kennzeichnet, dass jeder Modul ferner eine Konferenzbruecke aufweist, die von den zweiten Ausgaengen auf Befehl der Befehlseinheit addressierbar ist, um die algebraische Summe der von verschiedenen Kanaelen kommenden, den zweiten Registriermittel waehrend eines gegebenen Betriebszyklus entnommen Datenwoerter an die Verteilungsmittel abzugeben.

## Revendications

1. Un réseau de commutation modulaire pour système de télécommunications consistant essentiellement en un nombre de modules de guidage du signal "f" ($12_a$ ... $12_f$), chaque module ayant un groupe de terminaux d'entrée et de sorties connectés aux respectives unités périphériques, une unité de contrôle (120) connectée aux respectives unités de contrôle des autres modules, qui s'occupe de la supervision de toutes les opérations concernant l'analyse de la signalisation téléphonique et veille aussi à la direction, prolongation et supervision de toutes les connections et moyens de commutation contrôlés par la dite unité de contrôle, caractérisée par le fait que les dits moyens de commutation incluent en combinaison:

— une pluralité d'interfaces (151, 152 ...) connectée chacune à un sous groupe d'unités périphériques par un sous-groupe correspondant du dit groupe de terminaux; chaque interface incluant un set de moyens de transcodage (301, 302 ...) connecté chacun à un sous-ensemble correspondant du dit groupe d'unités périphériques, pour convertir des échantillons de message analogue en mots de données digitales et vice-versa;

—les premiers moyens de registre (161, 162 ...), chacun de ces premiers moyens de registre étant connecté à la sortie de l'une des dites interfaces (151, 152 ...) et comprenant un nombre de registres correspondant au nombre d'unités périphériques associées à chacune des dites interfaces (151, 152 ...), chacun des premiers registres étant autorisé par des signaux de temporisation provenant de l'unité de contrôle (120) à charger les mots de données digitales d'un canal de données provenant de l'unité d'interface correspondante (151, 152 ...)

— Les premiers moyens de concentration du canal (66) avec entrée connectée aux dits premiers moyens de registre (161, 162 ...) et avec un nombre réduit de premières sorties, portant dans chaque phase les bits d'un mot de donnée en entrée extraite du dit premier moyen de registre en réponse aux instructions provenant de la dite unité de contrôle;

— Les seconds moyens de registre ($81_a$, ... $81_b$) avec données en entrée connectées aux dites premières données en sortie de tous les dits modules pour stockage temporaire des mots de données portés à chaque phase;

— les seconds moyens de concentration du canal (90) avec connection de données en entrée aux dits moyens de registre ($81_a$ ... $81_f$) et avec un nombre réduit de secondes sorties, portant dans chaque phase les bits d'un mot de donnée en sortie extrait du dit second moyen de registre en réponse aux instructions provenant de la dite unité de contrôle;

— les moyens de distribution (98) insérés entre les dits seconds moyens de concentration du canal (90) et les dites interfaces pour alimentation sélective des mots de données en sortie provenant des dites secondes sorties aux dites interfaces (151, 152 ...) en réponse aux instructions provenant de la dite unité de contrôle, dite moyen de distribution (98) incluant les moyens d'expansion du canal et divers stockages de données (171, 172 ...) connectés chacun à une respective interface, dite moyens d'expansion du canal enregistrant les mots de données en sortie destinés à n'importe laquelle des dites interfaces dans les stocks de données correspondantes.

2. Un réseau comme décrit à la revendication 1 caractérisé par le fait que chacune des dites interfaces (151, 152 ...) comprend un set de troisièmes moyens de registre (401, 402 ...), un pour chacun des moyens de transcodage (301, 302 ...) utilisé pour le stockage temporaire des mots de données provenant du dit moyen de transcodage associé dans des espaces de temps respectifs d'un cycle d'opération coïcident avec un cadre PCM répétitif, divisé en différentes phases, chacun des dits espaces de temps comprenant autant de phases que d'unités périphériques sont connectées au moyen de transcodage associé (301, 302 ...). ·

3. Un réseau comme décrit à la revendication 1, caractérisé par le fait que chacune des dites interfaces (151, 152 ...) inclue les quatrièmes moyens de registre (501, 502 ...) chacun relié à une pluralité de moyens de transcodage (301, 302 ...) utilisée pour un stockage temporaire des mots de données en sortie destinés aux unités périphériques connectées à la dite interface, les dits quantrièmes moyens de registre étant sensibles aux instructions provenant de la dite unité de contrôle (120) pour diriger des échantillons de message correspondant aux mots de données en sortie stockés, en espaces de temps successifs vers des unités périphériques désignées d'un sous-groupe associé, un cycle d'opérations correspondant à un cadre PCM incluant autant d'espaces de temps que d'unités périphériques sont connectées aux différents moyens de transcodage reliés à chacun des quatrièmes moyens de registre;

4. Un réseau comme décrit à la revendication 2 caractérisé par le fait que les dits troisièmes moyens de registre (401, 402...) comprennent les moyens de conversion pour compléter chaque mot de donnée en entrée par des bits additionnels constituant un code de correction, la combinaison en bits qui en résulte étant transférée en parallèle aux dits premiers moyens de concentration du canal (66);

5. Un réseau comme décrit à la revendication 1 ou 2, caractérisé par le fait que chacun des dits moyens de registre comprend une multitude de couples de registres, les registres de chaque couple étant alternativement autorisés par la dite unité de contrôle à la réception des mots de données à stocker et à l'émission des mots de données ainsi stockés. ·

6. Un réseau comme défini à la revendication 1 ou 2, caractérisé par le fait que chaque module comprend en outre un pont de conférence auquel les dites secondes sorties peuvent s'adresser sous les instructions de la dite unité de contrôle pour l'émission de la somme algébrique des mots de données de différents canaux, extraits des dits second moyens de registre durant un cycle opérationnel donné, aux dits moyens de distribution.

fig.1

fig.2

fig.3

fig.4

fig.5